# EUROPEAN PATENT SPECIFICATION

(11) **EP 1 314 348 B1**
(45) Date of publication and mention of the grant of the patent: **05.08.2009**
(21) Application number: 02257988.2
(22) Date of filing: 20.11.2002
(51) Int. Cl.: A01G 1/12

(54) **Waste material handling apparatus**
Abfallgutbehandlungsvorrichtung
Appareil de traitement de déchets

(30) Priority: 22.11.2001 GB 0128009; 09.05.2002 GB 0210711
(43) Date of publication of application: 28.05.2003
(73) Proprietor: Birkett, Melvin, Rievaulx, Helmsley North Yorkshire, YO62 5LB (GB); Birkett, Justin, Rievaulx, Helmsley North Yorkshire, YO62 5LB (GB)
(72) Inventor: Birkett, Melvin, Rievaulx, Helmsley North Yorkshire, YO62 5LB (GB); Birkett, Justin, Rievaulx, Helmsley North Yorkshire, YO62 5LB (GB)
(74) Representative: Wood, Graham

(56) References cited:
- CH-A- 663 132
- US-A- 6 109 865
- US-A- 6 141 824

## Description

The invention to which this application relates is to apparatus for use in the effective disposal and/or collection and/or distribution of waste material such as, for example, but not exclusively, waste material from gardens, golf courses, historical homes sites, municipal parks such as leaves, twigs etc; from forestry, such as branches and associated debris, from farms such as manure, dead animals and the like, and so it will be appreciated that the apparatus can be used for a range of purposes and not limited to those examples given above, but hereinafter referred to generally as waste materials generated as part of ground care activities.

At the present time, when dealing with waste material, there are typically two options which are available. The waste material can either be collected together and disposed of on site or can be collected and transferred to another site for subsequent processing. On-site disposal is effective for relatively small amounts and can be aided by the provision of apparatus such as, for example, leaf blowers but as soon as any significant amount of material is to be collected, the person may find that they are unable physically to collect the same without the assistance of apparatus and then they frequently find they require to purchase or hire a number of different forms of apparatus such as blowers, burners, etc This makes the dealing with the material on site particularly expensive.

The alternative option is to transport the waste to another site for subsequent processing, either by private organisations or the local Council Authority and this is typically what is done by many individuals and larger organisations. However, this process can be inefficient in that it requires the material to be gathered, placed onto transport and then transported some distance to the waste disposal site and then of course requires further processing by the said organisations. This therefore is inefficient and is environmentally unsound but is conventionally regarded as being the only practical solution to the problem.

Some of the apparatus which is available typically comprise a impeller which is provided with a hose and which allows the suction of material from a surface into a collection bag. Other apparatus allows the insertion of the material into a shredding means to allow the same to be cut or shredded into smaller sizes. It is also known to provide apparatus which can blow air out from a impeller to cause relatively light material to be blown into a pile or collection area and this form of apparatus is typically known as a leaf blower.

US6141824 discloses an airflow device in which airflow is generated to allow both suction and blowing facilities to be selected. CH663132 discloses a vegetation burning device.

The aim of the present invention is to provide improved apparatus which allows improvements to be made in the collecting and/or processing of waste material and also to provide apparatus in a form which allows a range of means for dealing with the waste material to be provided for selective use by the user of the apparatus, thereby avoiding the need for the user to have various items of apparatus to hand. It also allows the user to have a number of options available to them from one item of apparatus in terms of how they deal and dispose of the waste material.

In accordance with a first aspect of the invention there is provided apparatus for performing a number of material handling facilities, said apparatus including at least one impeller unit connected to drive means therefore, said impeller unit provided in a housing with a plurality of spaced apart ports, said ports allowing connection with the interior of the housing in which the impeller unit is located and the selective connection of apparatus to one or a combination of said ports, characterised in that one selectable material handling facility allows material to be inserted directly into the housing to contact with the flails of the impeller unit to render the material to be shredded and/or cut into a smaller size prior to leaving the housing and second and third selectable material handling facilities in which the material can be respectively sucked or blown by an air flow generated by the apparatus and said selection between the particular material handling facility is made by the selective opening of the ports and selective connection of an inlet channel for the suction facility or a channel for the blowing facility.

It should be noted that the reference to impeller unit is equally applicable to a fan unit and reference hereonin to the provision of an impeller unit should be interpreted as applicable to the provision of a fan unit.

Typically, those ports which are not selected for a particular material handling facility, are in a closed or shielded position.

Preferably, the means for closing said ports are spring mounted so as to ensure that the same are biased towards a closed position thereby providing a failsafe facility to prevent unauthorised access. Preferably, if a port is selected then the apparatus to be connected thereto is introduced to locate with location means and are then required to be moved in conjunction with the location means to move the closure for that port to an open position whereupon the apparatus can be inserted and located with respect to said opened port.

Typically, the location of each of said ports is selected with respect to the impeller unit and/or drive means so as to ensure that the plurality of material handling facilities can be achieved by the selection of the appropriate port or ports and attachment of apparatus thereto. For example, in one embodiment, if a vacuuming action is required, a first port is selected to be opened and have a material pick-up pipe attached thereto, said pipe, at its distal end, having an open end through which the material passes from the surface, said material passing through the pipe or tube, into the impeller unit housing and drawn out of the impeller unit via a second port to which a collection means is attached.

To exert a blowing action, the material pick-up pipe or tube is connected to the port to which the collection means was previously attached and the first port is shielded. The shielding means is provided with a grill to allow air to be drawn into the impeller unit housing through the shielded port, exit the same through the newly connected pipe or tube and to exit the end of the pipe or tube to exert the blowing action. The apparatus can also be used to provide a burning facility in this same configuration with the addition of a fuel supply line running from a fuel tank, typically provided as an integral part of the apparatus housing, which allows the supply of fuel along the supply line to a nozzle attached so as to be positioned at or adjacent the end of the pipe or tube. The supply of the fuel and exit through the nozzle into the air supply, and subsequent ignition of the same, causes a burning effect on the material adjacent thereto and therefore acts to light the material and, even with the fuel supply subsequently shut off, the blown air acts to encourage the fire.

In a yet further embodiment, the provision of a shredding facility requires the connection of material feed apparatus to a port of the apparatus whereby the material to be shredded is introduced into the impeller unit housing, shredded and then departs the impeller unit through a further port to which the output apparatus is connected.

Preferably, the end of the material pick-up pipe or tube used for the vacuuming of material, is provided with a handle means to allow the same to be gripped by a user to allow the positioning of the end with respect to the surface and the material to be collected to be controlled. In one embodiment, the end of the pipe or tube can be provided with wheels or rollers to allow the same to move across the surface and at the same time, ensures that the position of the end of the pipe or tube with respect to the material is sufficiently close so that the material is drawn up through the tube by the vacuum action.

Typically the impeller unit and drive means are located within a common housing, said housing having located thereon a series of ports and, for each port, a mechanical attachment means is provided for further apparatus.

In one embodiment, the housing is mounted on a trailer to allow the same to be towed and preferably is selectively detachable from said trailer. In a preferred embodiment, the housing is provided with means to allow the same to be lifted by forklift forks and/or provided with hook formations to allow the same to be located on the edge of a larger trailer or container as required.

In a yet further embodiment of the invention the apparatus includes a power washer, said power washer comprising a pump located within the housing, an inlet means for the supply of liquid to the said pump and an outlet means for the supply of the liquid from the pump and connection with application means for the high pressure liquid. Typically, in order to operate the pump, the drive means of the apparatus is selectively controlled so as to allow transfer of the drive between the impeller unit and the pump. A generator can also be provided as part of the apparatus for selective connection, hence allowing the generation of a power supply from which further items of apparatus can be supported.

Preferably, the pipe or tube used for the vacuum, blowing and/or burning facilities can be of selected diameter size and/or alternatively, a range of pipes or tubes can be provided with the apparatus for selective attachment. Furthermore, a series of attachments can be provided for selective attachment to the distal end of the pipe or tube to allow improved collection of particular forms of material.

In a preferred embodiment the apparatus includes an impeller unit and a pump, both capable of being driven by drive means provided as part of the apparatus, and wherein control means arc provided to allow the selective engagement of the pump or impeller unit to the drive means and thereby allow the selection of different material handling facilities.

In a further embodiment of the invention, the apparatus includes a channel which can be selectively connected to the inlet of the impeller said channel having an open end which can be used as a suction device to pick up material from a surface. In one embodiment, the material which is picked up passes along the channel and out of the outlet without passing through the impeller. In an alternative embodiment, the waste material passes through the channel and into the impeller itself with the flails of the impeller causing the material to be shredded and/or cut into smaller sizes prior to leaving the apparatus via the outlet.

In a yet further embodiment, there is provided a further inlet to the impeller unit which allows waste material to be inserted directly into the impeller for shredding and departure of the apparatus via the outlet.

In a yet further embodiment of the invention, the outlet channel can be used without fuel being injected into the same so as to allow the blown air from the impeller to be used to blow material into a particular location and/or dry said material.

In one embodiment, the apparatus can be provided to be carried by a person with the inlet and/or outlet channels controlled by a person via their arm and hand. In an alternative arrangement, the apparatus can he placed on a surface and/or mounted on a transportable trailer and/or vehicle with the inlet and/or outlet channels controllable by a person from said trailer, or at a position remote from the impeller housing.

In one embodiment the inlet and outlet channels, when fitted to the impeller unit, are flexible and/or telescopic and/or extendable to allow the open end of the said inlet or outlet channels to be moved by the person to the location of the waste material on which the same are to be used.

The facilities provided by the apparatus and available for selection by the user are any, or any combination of, a blowing facility; suction facility; drying facility; burning facility; shredding facility; washing facility; power generating facility, in accordance with a preferred embodiment of the invention.

In a preferred embodiment a channel is provided to be selectively connectable to the outlet to allow the direction of said air and/or flames from the outlet to be controlled.

In one embodiment, the apparatus is used, in a first mode, to dry waste material by the blowing of air thereon in the outer channel; followed by the use of the same apparatus to ignite said waste material and followed in turn by the flow of air to said burning material to encourage continued burning of the material.

Typically, once the waste material is ignited, the supply of fuel into the air flow is stopped so that only air is subsequently blown onto the burning waste material.

Typically the fuel supply can be controlled by either a manually operated control valve at the fuel inlet or at the fuel supply connected to the fuel inlet, or alternatively can be automatically controlled by electrical switches operated by the user of the apparatus. Typically, the particular type of fuel control used is dependent on the size, and expense, of the apparatus model.

Preferably, the fuel, when introduced into the air flow is formed into a spray and can be ignited either by bringing a naked flame into, or into proximity with, the spray or alternatively by a spark ignitor positioned in the channel downstream of the introduction of said fuel.

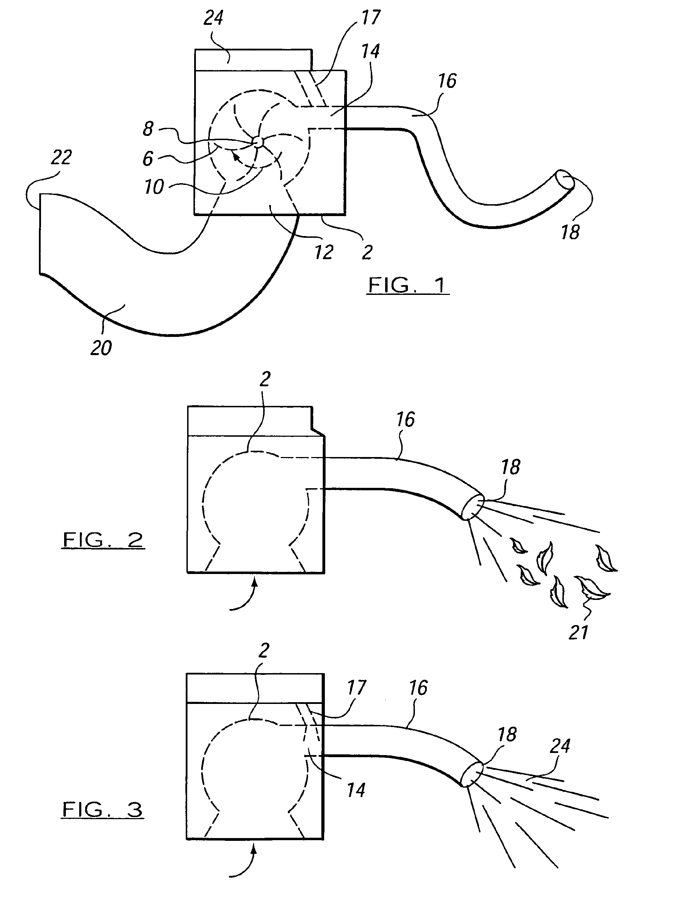

Specific embodiments of the invention are now described with reference to the accompanying drawings, wherein:
Figure 1 illustrates the apparatus of the invention in one embodiment;
Figure 2 illustrates the apparatus of Figure 1 in a first use;
Figure 3 illustrates the apparatus of the invention in a second use;
Figure 4 illustrates the apparatus of the invention in a further use;
Figure 5 illustrates the apparatus of the invention in a yet further use; and
figures 6A-C illustrate particular embodiments in which the apparatus may be provided.
Figures 7a and b illustrate an embodiment of the apparatus of the invention showing the housing mounted on a towable trailer;
Figures 8a and b illustrate the apparatus of the invention for use in a vacuuming facility;
Figures 9a and b illustrate the apparatus for use in a blowing facility;
Figures 10a and b illustrate two embodiments of the apparatus in use as a burning facility;

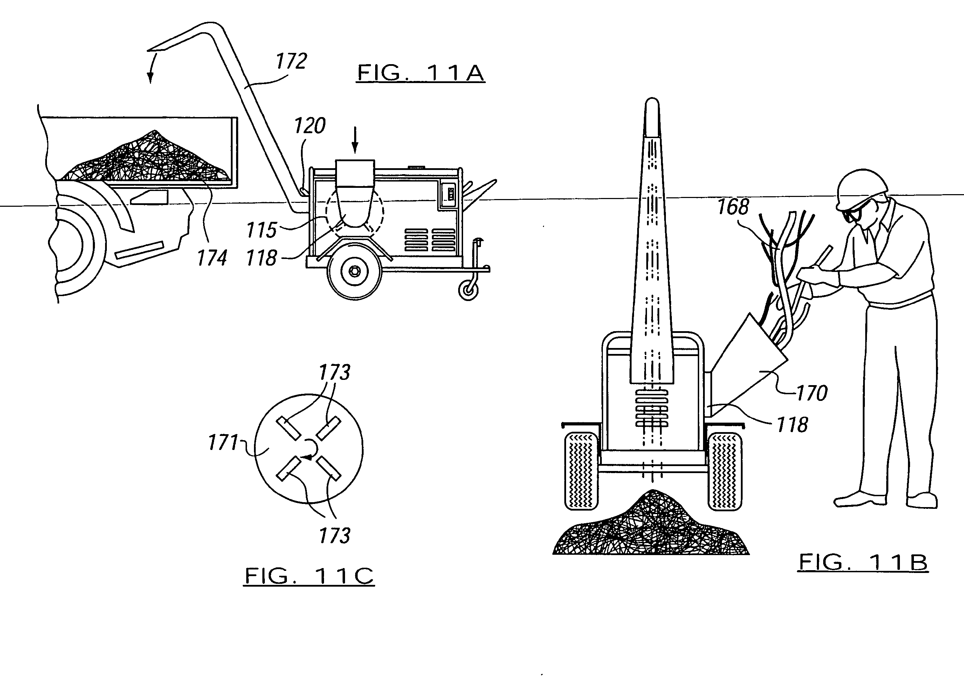

Figures 11a, b and c illustrate the apparatus for use in a shredding facility which is not part of the invention as claimed; and
Figures 12a and b illustrate the apparatus for use in a pressure washing facility.
Referring firstly to Figure 1, there is illustrated a schematic diagram of the apparatus of the invention in a first embodiment. The apparatus comprises a housing 2 in which there is provided an impeller unit 4 shown in broken lines, said impeller having a series of flails 6 provided to rotate around a centre point 8 in the direction indicated by arrow 10. The impeller unit has an inlet 12 and an outlet 14. Selectively connectable to the outlet 14 is the channel 16 which has an open end 18 and, selectively connectable to the inlet 12 is channel 20 which also has an open end 22. Provided at, or adjacent to, the outlet 14 there is provided a fuel inlet 17 which can be selectively opened or closed, said fuel inlet in communication with a fuel supply 24. An ignitor (not shown) can also be provided at the inlet or channel bur downstream from the fuel inlet 17.

The impeller unit can be powered by any suitable means, for example it may be electrically driven or petrol driven.

Figure 2 illustrates a first use of the invention wherein only the outlet channel 16 is connected to the impeller unit housing 2. The fuel inlet is closed so that the air blown from the impeller unit is blown through the channel and out of the open end 18 so as to allow debris such as leaves, twigs and the like to be blown across the surface for collection to a particular location.

Figure 3 illustrates a further embodiment of the invention wherein again only the channel 16 is connected to the outlet 14 and in this case the fuel inlet 17 is open to supply fuel into the path of the air blown from the impeller unit and so the fuel is effectively carried by the air in a spray form through the channel 16. An ignitor is provide either in the form of an automatic spark ignitor or simply by placing a flame at the open end 18, so as to ignite the fuel carried by the air and so a flame 24 is emitted from the open end 18 of the channel 16. As the channel 16 is positionable by the user the flame can be directed onto the waste material to ignite the same and cause the same to burn.

The provision of the embodiment shown in Figures 2 and 3 can be used in combination to allow waste material to be burned which would otherwise normally be difficult to burn due to the wet conditions of the same. Thus, the use of the apparatus in accordance with Figure 2 can be performed to, firstly, collect the waste material into a pile and then further blowing of air onto the material can be used to dry at least a portion of the waste material. When it is deemed to be sufficiently dry, fuel can be injected into the channel 16, ignited and the flame emitted from the channel is used to ignite the waste material and cause the same to burn. Once burning, the fuel supply can be switched off but the blown air can be continued to be directed into the burning material so as to encourage and increase the burning of the same and allow disposal of the waste material as quickly as possible.

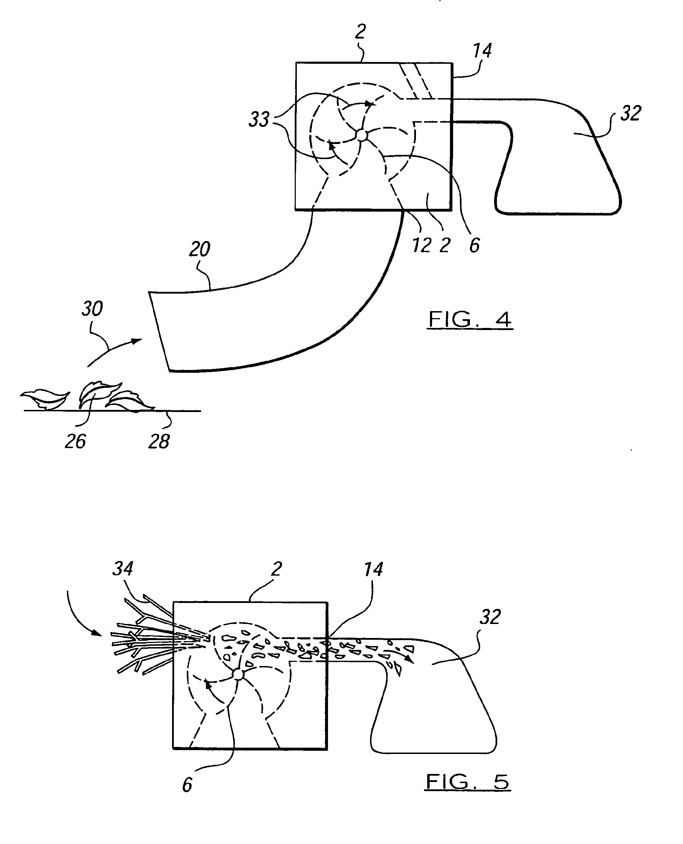

Figure 4 illustrates a further embodiment of use of the apparatus wherein the inlet channel 20 is connected to the inlet 12 of the impeller unit housing 2 and acts as a suction means to remove debris 26 from a surface 28 in the direction of arrow 30 through the inlet channel 20 and into a collection bag 32 which can be attached to the outlet 14 of the impeller housing 2. The waste material typically passes through the impeller unit as indicated by the arrows 33 and as it does so, the frails 6 of the impeller unit can cause the waste material to be cut into smaller portions prior to entering the collection bag 32.

Figure 5 shows a variation on the embodiment of Figure 4 wherein rather than connecting the channel 20 to the input 12, an aperture inlet 34 is provided in the housing which allows waste material to be fed through the aperture 34 directly into the impeller. The waste material is then shredded by the fails 6 and exits via the outlet 14 into a collection bag 30 or alternatively onto a pile on the surface.

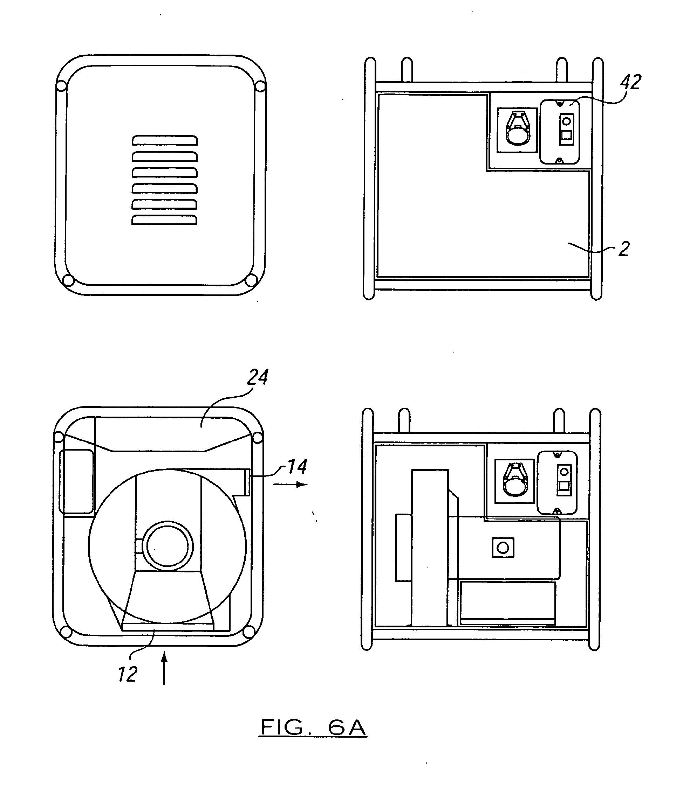

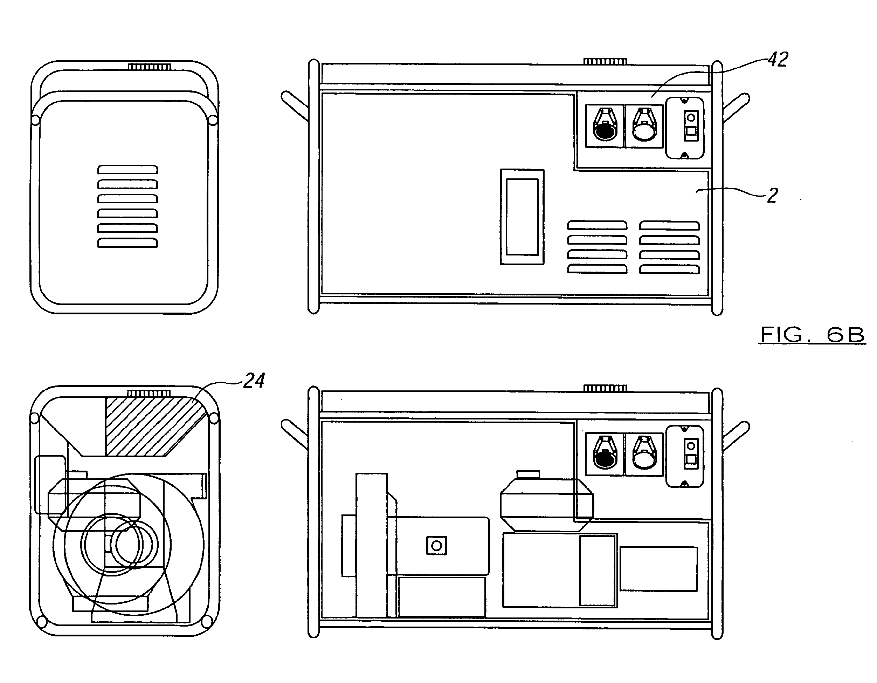

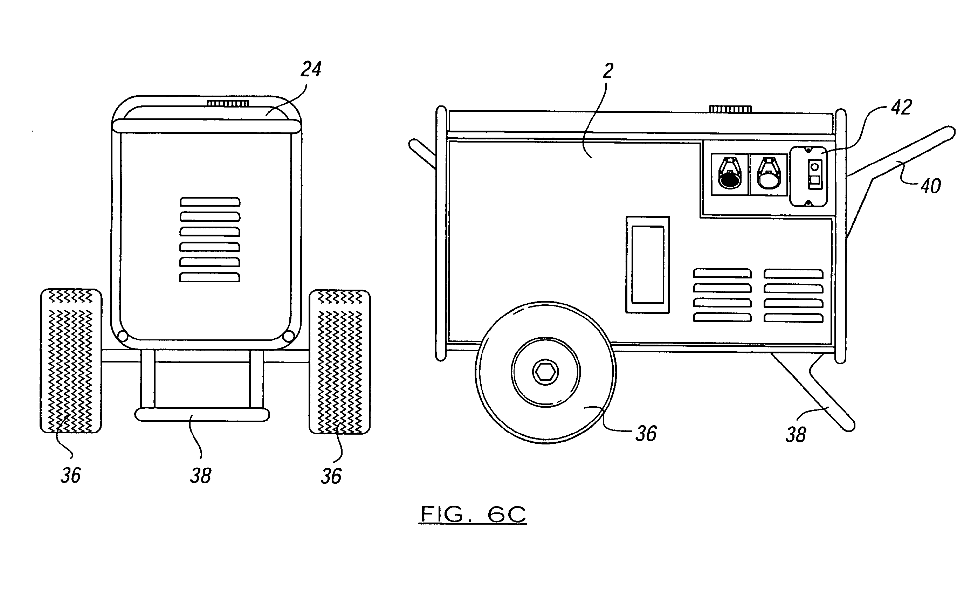

Figures 6A, B and C illustrate various formats in which the impeller housing 2 can be provided, with Figures 6A and B illustrating a carryable housing which can be carried by one or two persons and/or may be transported on a truck or the like, to a location for use. Figure 6C illustrates the impeller housing 2 provided in the form of a trailer, with wheels 36, support 38 and handle 40. It will thus be appreciated that the apparatus can be provided in any suitable form to suit particular requirements.

The apparatus can be operated by a user using conventional electronic switches in a control panel 42 as illustrated in Figures 6A-C and the fuel tank 24 can be provided as an integral part of the housing as illustrated in Figures 6A,B,C.

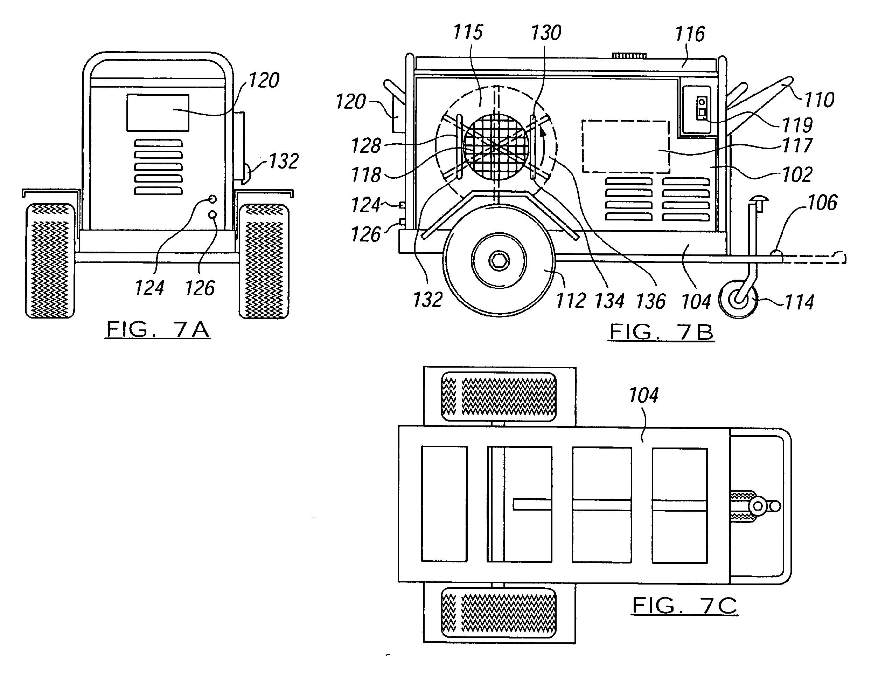

Referring firstly to Figure 7a, there is illustrated the apparatus in one embodiment where it comprises a housing 102 mounted on a trailer 104 which is provided to be towable via bar 106 and also towable across a surface by means of handle 110 and wheels 112, 114 hy the user of the apparatus. The housing has mounted therein, and shown in this drawing in broken lines, an impeller unit 115 and drive means 117 with control means 119, as well as a fuel tank 116 for selective use. A plurality of ports 118, 120, are provided on the housing leading to the impeller unit and two further supply connections 124, 126 are provided. Each of the ports is maintained in a normally closed position by the means of metal plates such as those illustrated in port 120 or shielded by a grille illustrated with respect to port 118. With reference to port 118, each port can be provided with a mechanical closure means whereby there is provided two slots 128, 130 on which are provided, for movement, location means 132, 134. The location means are connected to the grille closing the port 118 and are normally spring biased to a closed position as shown. In order to open the port, the item of apparatus to be connected thereto is provided with lugs for location with the hooks 132, 134 and movement of the hooks, and hence the plate, is required in a vertical direction, indicated by arrow 136, to move the plate to allow the port to be opened and thereafter movement of the apparatus into the port to locate the same and maintain the location means 132, 134 and plate in an opened position for as long as the apparatus is connected. When the apparatus is removed, the plate returns to the closed position as illustrated in Figure 7b.

The selective location of further apparatus with the ports of the housing allows the selection of the material handling facility to be provided via the apparatus of the invention and examples of this are now shown.

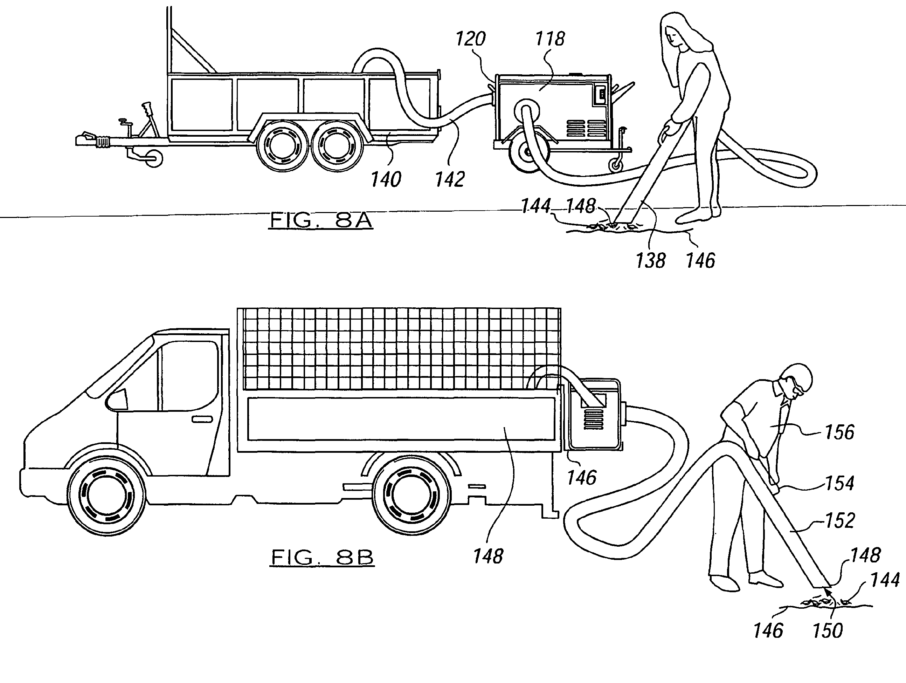

In Figure 8a, the apparatus of the format of Figures 7a to 7c is illustrated with the port 118 connected to a material pick-up pipe or tube 138 and port 120 connected to collection means 142 passing into a collection trailer 140. In this embodiment, with the impeller unit operating, a vacuum action is created in the pipe 138, and so material 144 on the surface 146 is collected via the vacuum action at the end 148 of the pipe or tube 138 and passes through the end 148, through the pipe 138 and into the housing of the apparatus and is acted upon by the impeller unit to leave the housing via the collection means 142. A further embodiment of this is shown in Figure 8b wherein the housing has been removed from the trailer and is mounted via hook means 146 on a collection trailer 148 and once again the material 144 can be sucked from the surface 146 as indicated by arrow 150 through the pipe means. The pipe means can also preferably be provided with a relatively rigid end 152 provided with handle 154 to allow the user 156 to support and locate the end 148 adjacent the material to be collected, therefore allowing and ensuring effective removal of the material.

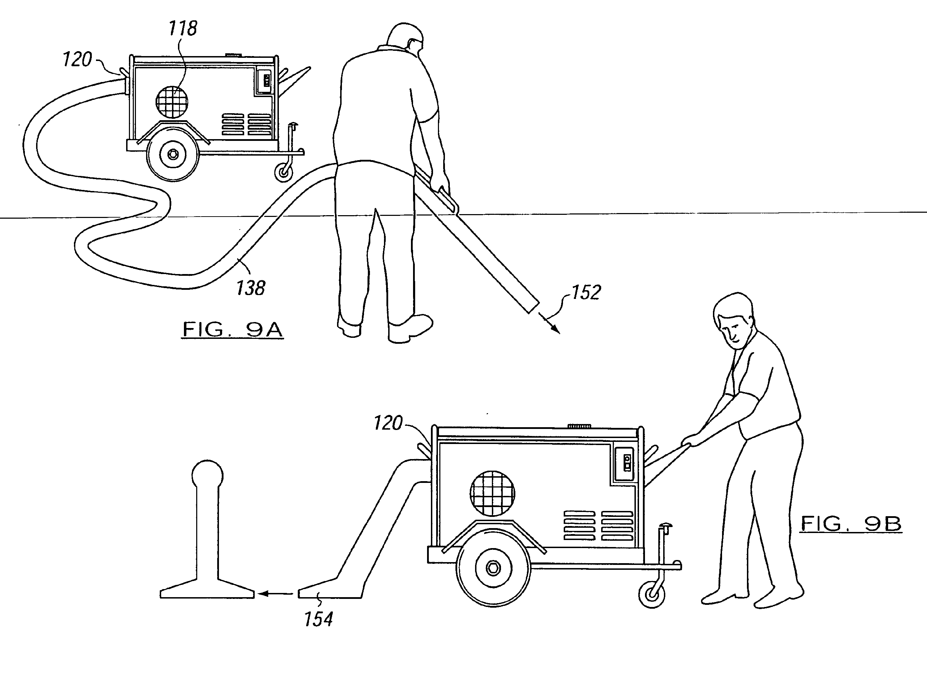

Figures 9a and 9b illustrate a further embodiment of the invention wherein the housing is connected via port 120 to a tube 138 with the port 118 closed by the grille. In this embodiment, with the impeller unit rotating blown air is provided via the tube 138 with the air being drawn in through the grilled port 118 and blown out by the impeller unit through port 120 and via the tube 138 to the desired area as indicated by arrow 152. As is illustrated in Figure 9b, various attachment means 154 can be provided for attachment to the port 120 to provide specific blowing facilities.

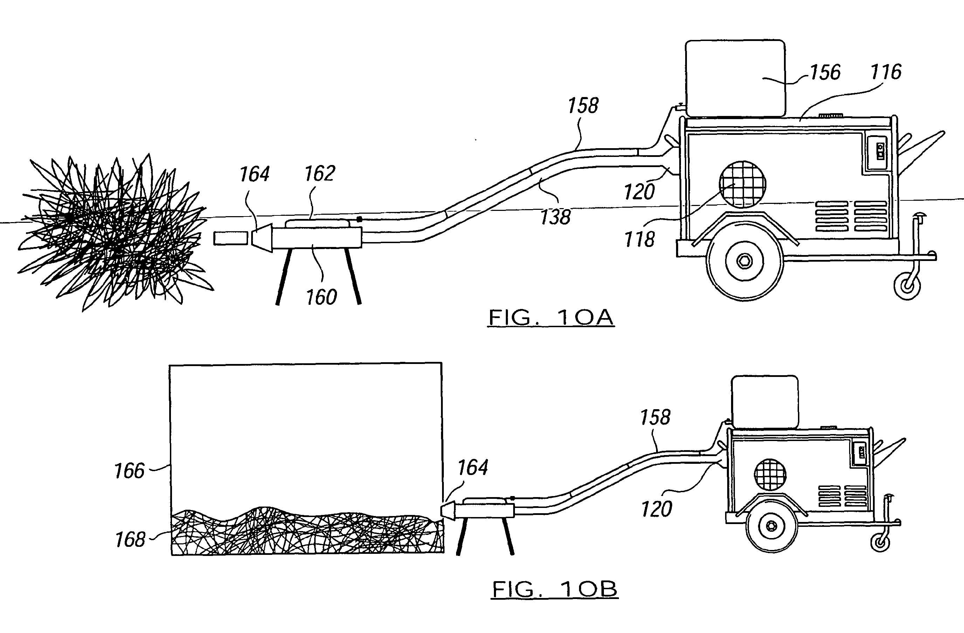

Figures 10a and b illustrate the use of the apparatus to provide a burning facility with, in this case, the pipe or tube 138 mounted as in Figures 9a and b to the port 120 with the air intake being through the grilled port 118. In addition, fuel is supplied either by the additional tank 156 or tank 116 provided integrally with the housing via a supply means 158. In order to prevent damage to the end of the pipe or tube, which is typically of plastics material, the tube is attached to a metal burner head 160 and the fuel supply means is provided to a rigid supply pipe 162 provided with a nozzle, not shown, at the end 164 of the burner head. In Figure 10a, the apparatus is shown for use in burning brash or rubbish and in Figure 10b is shown attached to an incineration unit 166 in which fallen stock 168 can be held and burned. In either embodiment, air is typically blown onto the material to be burned for a period of time to dry the material and then the fuel is introduced via fuel supply means 158 to the nozzle at the burner head 164 and is then ignited. Once ignited, the supply of the blowing air through the pipe 138 and burner head 160 ensures that the burning action is on the fallen stock or rubbish and sets light to the same. The fuel supply can then be disconnected and a continued supply of blown air helps the burning of the fallen stock or rubbish to continue.

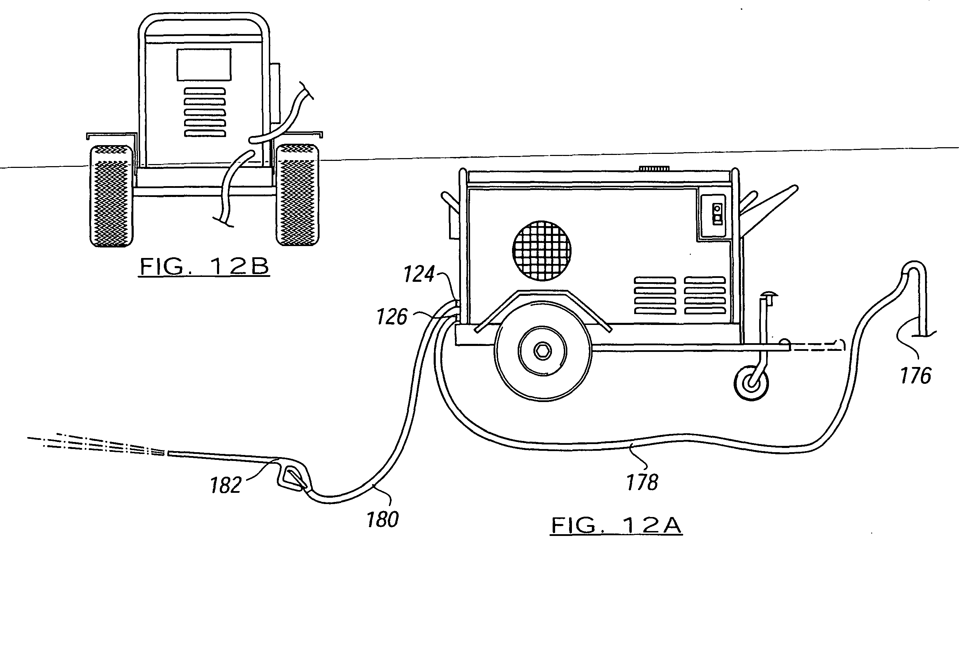

Figures 12a and 12b illustrate the apparatus in a further embodiment as a power washer and in this embodiment, the inlet means 126 is connected to a liquid supply, in this case water 176 via pipe 178 whereupon the supply of water passes into the housing to a pump, not shown, which in turn pressurises the water supply which exits via outlet 124 and via supply pipe 180 to a hand held device 182 for the application and direction of the pressurised water. Typically, the pump is driven by the drive means also used for the impeller unit and control means are provided on the housing to allow the selective engagement of the pump or impeller unit with the drive means to suit the particular facility required at that time.

It will therefore be appreciated that the present invention provides an apparatus which can be used as a single unit but which has a combination of configurations for use, to provide a desired effect with regard to waste material and the disposal of the same. The apparatus provides the user with a cost effective way of dealing with a wide range of waste material, provides the user with a number of options of how to deal with the waste material to suit particular conditions and environmental concerns and/or conditions. The apparatus may be used, and of use, to a wide range of persons and organisations ranging from domestic use through individual commercial use through to a relatively large scale organisation. It is envisaged that one or a number of the configurations of the apparatus could be of use, for example, to farmers in disposing of fallen animals, gardeners in the collection and subsequent disposal of waste material, cleaning companies requited to clean areas of commercial organisations and to then dispose of the waste material, local Councils with respect to streets and parks, golf courses, stately homes, and so on. The apparatus as herein defined also avoids the need for the user to purchase or hire a wide range of different apparatus to perform waste material disposal.

## Claims

1. Apparatus for performing a number of material handling facilities, said apparatus including at least one impeller unit (4) connected to drive means therefore, said impeller unit provided in a housing (2) with a plurality of spaced apart ports, said ports allowing connection with the interior of the housing in which the impeller unit is located and the selective connection of apparatus to one or a combination of said ports, **characterised in that** one selectable material handling facility allows material to be inserted directly into the housing to contact with the flails (6) of the impeller unit to render the material to be shredded and/or cut into a smaller size prior to leaving the housing and second and third selectable material handling facilities in which the material can be respectively sucked or blown by an air flow generated by the apparatus and said selection between the particular material handling facility is made by the selective opening of the ports and selective connection of an inlet channel (20) for the suction facility or a channel (16) for the blowing facility.

2. Apparatus according to claim 1 **characterised in that** the ports which are not selected for a particular material handling facility are provided in a closed or shielded position.

3. Apparatus according to claim 1 **characterised in that** the means for closing said ports are biased towards a closed position.

4. Apparatus according to claim 1 **characterised in that** apparatus to be connected to a port is located with location means, said apparatus and location means movable to move the closure for that port to an open position whereupon the apparatus is located with respect to said open port.

5. Apparatus according to claim 1 **characterised in that** the location of each of said ports is selected with respect to the impeller unit and/or drive means in the housing so as to ensure that the plurality of material handling facilities can be achieved by the selection of the appropriate port or ports and attachment of apparatus thereto.

6. Apparatus according to claim 1 **characterised in that** the impeller unit and drive means are located within a common housing, said housing having located thereon a series of ports, and for each port a mechanical attachment means is provided for further apparatus.

7. Apparatus according to the claim 1 **characterised in that** the apparatus is provided with an additional facility in the form of a power washer, comprising a pump located within the housing, an inlet means for the supply of liquid to the said pump and an outlet means for the supply of the liquid from the pump and connection with application means for high pressure liquid.

8. Apparatus according to claim 7 **characterised in that** in order to operate the pump, the drive means of the apparatus is selectively controlled so as to allow transfer of the drive between the impeller unit and pump.

9. Apparatus according to claim 1 **characterised in that** the inlet channel has an open end which can be used as a suction device when the inlet channel is connected to the impeller unit inlet to pick up material from a surface.

10. Apparatus according to claim 9 **characterised in that** a material which is picked up passes along the channel and out of the outlet bypassing the impeller unit.

11. Apparatus according to claim 1 **characterised in that** a fuel supply is provided to an outlet channel, said fuel supply selectively activated and, when activated directing fuel into the air flow from the outlet.

12. Apparatus according to claim 1 **characterised in that** there is provided at or adjacent to an outlet, a fuel supply inlet, said fuel selectively supplied through an inlet into a flow of air from the outlet to allow said fuel to be ignited and flames to be emitted from said outlet.

13. Apparatus according to claim 12 **characterised in that** the channel when connected to the outlet allows the direction of said air and/or flames from the outlet to be controlled.

14. Apparatus according to claim 13 **characterised in that** the apparatus can be used in a first mode to dry waste material by the blowing of air thereon followed by use of the same apparatus to ignite said waste material and followed in turn by the flow of air to the said burning material to encourage continued burning of the material.

15. Apparatus according to claim 14 **characterised in that** once the waste material is ignited the supply of fuel into the airflow is stopped so that subsequently only air is blown onto the burning waste material.

16. Apparatus according to claim 12 **characterised in that** the fuel supply is controlled by a valve at the fuel inlet from a fuel supply connected to the fuel inlet.

17. Apparatus according to claim 12 **characterised in that** the fuel when introduced into the air flow is formed into a spray.

## Patentansprüche

1. Vorrichtung zum Betreiben einer Reihe von Materialhandhabungsfunktionen, wobei die genannte Vorrichtung Folgendes umfasst: wenigstens eine Laufradeinheit (4), die mit einem Antriebsmittel dafür verbunden ist, wobei die genannte Laufradeinheit in einem Gehäuse (2) mit mehreren beabstandeten Anschlüssen vorgesehen ist, wobei die genannten Anschlüsse eine Verbindung mit dem Innern des Gehäuses, in dem sich die Laufradeinheit befindet, und eine selektive Verbindung der Vorrichtung mit einer oder einer Kombination der genannten Anschlüsse zulassen, **dadurch gekennzeichnet, dass** eine wählbare Materialhandhabungsfunktion das direkte Einführen von Material in das Gehäuse zulässt, so dass es mit den Flegeln (6) der Laufradeinheit in Kontakt kommt, um Zu bewirken, dass das Material auf eine geringere Größe zerfetzt und/oder zerschnitten wird, bevor es das Gehäuse verlässt, und eine zweite und eine dritte wählbare Materialhandhabungsfunktion, bei denen das Material jeweils durch einen von der Vorrichtung erzeugten Luftstrom gesaugt oder geblasen wird und die genannte Auswahl der jeweiligen Materialhandhabungsfunktion durch selektives Öffnen der Anschlüsse und selektives Verbinden eines Einlasskanals (20) für die Saugfunktion oder eines Kanals (16) für die Blasfunktion erfolgt.

2. Vorrichtung nach Anspruch 1, **dadurch gekennzeichnet, dass** sich die Anschlüsse, die nicht für eine bestimmte Materialhandhabungsfunktion gewählt werden, in einer geschlossenen oder abgeschirmten Position befinden.

3. Vorrichtung nach Anspruch 1, **dadurch gekennzeichnet, dass** die Mittel zum Schließen der genannten Anschlüsse in Richtung auf eine geschlossene Position Vorgespannt sind.

4. Vorrichtung nach Anspruch 1, **dadurch gekennzeichnet, dass** die mit einem Anschluss zu verbindende Vorrichtung mit einem Positioniermittel positioniert wird, wobei die genannte Vorrichtung und das genannte Positioniermittel beweglich sind, um den Verschluss für diesen Anschluss in eine offene Position zu bewegen, wonach die Vorrichtung mit Bezug auf den genannten offenen Anschluss positioniert wird.

5. Vorrichtung nach Anspruch 1, **dadurch gekennzeichnet, dass** der Ort jedes der genannten Anschlüsse mit Bezug auf die Laufradeinheit und/oder das Antriebsmittel in dem Gehäuse so gewählt wird, dass sichergestellt wird, dass die mehreren Materialhandhabungsfunktionen durch Wählen des/der geeigneten Anschlusses/Anschlüsse und das Anschließen der Vorrichtung daran aktiviert werden können.

6. Vorrichtung nach Anspruch 1, **dadurch gekennzeichnet, dass** sich die Laufradeinheit und das Antriebsmittel in einem gemeinsamen Gehäuse befinden, wobei an dem genannten Gehäuse eine Reihe von Anschlüssen positioniert sind und für jeden Anschluss ein mechanisches Anschlussmittel für weitere Vorrichtungen vorgesehen ist.

7. Vorrichtung nach Anspruch 1, **dadurch gekennzeichnet, dass** die Vorrichtung mit einer zusätzlichen Funktion in Form einer Hochdruckwaschvorrichtung vorgesehen ist, die eine in dem Gehäuse befindliche Pumpe, ein Einlassmittel für die Zufuhr von Flüssigkeit zu der genannten Pumpe und ein Auslassmittel für die Zufuhr der Flüssigkeit von der Pumpe und für den Anschluss an ein Applikationsmittel für Hochdruck Flüssigkeit umfasst.

8. Vorrichtung nach Anspruch 7, **dadurch gekennzeichnet, dass** das Antriebsmittel der Vorrichtung zum Betreiben der Pumpe selektiv so gesteuert wird, dass der Antrieb zwischen der Laufradeinheit und der Pumpe übertragen werden kann.

9. Vorrichtung nach Anspruch 1, **dadurch gekennzeichnet, dass** der Einlasskanal ein offenes Ende hat, das als Saugvorrichtung verwendet werden kann, wenn der Einlasskanal mit dem Einlass der Laufradeinheit verbunden ist, um Material von einer Oberfläche aufzunehmen.

10. Vorrichtung nach Anspruch 9, **dadurch gekennzeichnet, dass** aufgenommenes Material durch den Kanal und aus dem Auslass unter Umgehung der Laufradeinheit passiert.

11. Vorrichtung nach Anspruch 1, **dadurch gekennzeichnet, dass** eine Brennstoffversorgung an einem Auslasskanal vorgesehen ist, wobei die genannte Brennstoffversorgung selektiv aktiviert wird und im aktivierten Zustand Brennstoff in den Luftstrom von dem Auslass leitet.

12. Vorrichtung nach Anspruch 1, **dadurch gekennzeichnet, dass** an oder neben einem Auslass ein Brennstoffversorgungseinlass vorgesehen ist, wobei der genannte Brennstoff selektiv durch einen Einlass in einen Strom von Luft von dem Auslass zugeführt wird, um es zuzulassen, dass der genannte Brennstoff entzündet wird und Flammen aus dem genannten Auslass ausgestoßen werden.

13. Vorrichtung nach Anspruch 12, **dadurch gekennzeichnet, dass** es der Kanal, wenn er mit dem Auslass verbunden ist, zulässt, die Richtung der genannten Luft und/oder der Flammen aus dem Auslass zu regulieren.

14. Vorrichtung nach Anspruch 13, **dadurch gekennzeichnet, dass** die Vorrichtung in einem ersten Modus verwendet werden kann, um Abfallmaterial zu trocknen, indem Luft darauf geblasen wird, und dieselbe Vorrichtung dann verwendet wird, um das genannte Abfallmaterial zu entzünden, und dann wieder der Luftstrom auf das genannte brennende Material geblasen wird, um das Weiterbrennen des Materials zu fördern.

15. Vorrichtung nach Anspruch 14, **dadurch gekennzeichnet, dass** nach dem Entzünden des Abfallmaterials die Zufuhr von Brennstoff in den Luftstrom gestoppt wird, so dass danach nur Luft auf das brennende Abfallmaterial geblasen wird.

16. Vorrichtung nach Anspruch 12, **dadurch gekennzeichnet, dass** die Brennstoffzufuhr mit einem Ventil am Brennstoffeinlass von einer mit dem Brennstoffeinlass verbundenen Brennstoffversorgung reguliert wird.

17. Vorrichtung nach Anspruch 12, **dadurch gekennzeichnet, dass** der Brennstoff, wenn er in den Luftstrom eingeleitet wird, zu einem Spray geformt wird.

## Revendications

1. Appareil destiné à effectuer un certain nombre de fonctions de manutention de matériaux, ledit appareil comportant au moins une unité roue mobile (4) laquelle est raccordés à des moyens d'entraînement pour celui-ci, ladite unité roue mobile étant montée dans un carter (2) pourvu d'une pluralité d'orifices espacés les uns des autres, lesdits orifices procurant un branchement avec l'espace interne du carter dans lequel l'unité roue mobile est positionnée et le branchement sélectif de l'appareil à l'un desdits orifices ou à une combinaison desdits orifices, **caractérisé en ce qu'**une fonction de manutention de matériaux sélectionnable permet d'introduire directement des matériaux dans le carter pour les mettre en contact avec les fléaux (6) de l'unité roue mobile pour que ceux-ci donnent aux matériaux à déchiqueter et/ou à couper une taille plus petite avant leur sortie du carter, et une deuxième et troisième fonctions de manutention de matériaux sélectionnables dans le cas desquelles les matériaux peuvent être respectivement aspirés ou soufflés par un flux d'air généré par l'appareil, et ladite sélection entre les fonctions spécifiques de manutention de matériaux est réalisée par l'ouverture sélective des orifices et le branchement sélectif d'un passage d'admission (20) pour la fonction d'aspiration ou un passage (16) pour la fonction de soufflage.

2. Appareil selon la revendication 1, **caractérisé en ce que** les orifices qui ne sont pas sélectionnés pour une fonction spécifique de manutention de matériaux sont mis dans une position fermée ou couverte.

3. Appareil selon la revendication 1, **caractérisé en ce que** les moyens servant à fermer lesdits orifices sont poussés vers une position fermée.

4. Appareil selon la revendication 1, **caractérisé en ce que** l'appareil destiné à être branché sur un orifice est positionné à l'aide de moyens de positionnement, ledit appareil et lesdits moyens de positionnement étant mobiles afin de déplacer le dispositif de fermeture pour l'orifice concerné jusqu'à une position d'ouverture, après quoi l'appareil est positionné par rapport audit orifice ouvert.

5. Appareil selon la revendication 1, **caractérisé en ce que** le positionnement de chacun desdits orifices est sélectionné par rapport à l'unité roue mobile et/ou aux moyens d'entraînement dans le carter de sorte à s'assurer que la pluralité de fonctions de manutention de matériaux puisse être obtenue grâce à la sélection de l'orifice ou des orifices approprié(s) et au raccordement de l'appareil à celui-ci ou à ceux-ci.

6. Appareil selon la revendication 1, **caractérisé en ce que** l'unité roue mobile et les moyens d'entraînement sont positionnés au sein d'un carter commun, ledit carter comportant à sa surface une série d'orifices, et pour chaque orifice des moyens de Fixation mécaniques sont prévus pour un appareil supplémentaire.

7. Appareil selon la revendication 1, **caractérisé en ce que** l'appareil est pourvu d'une fonction additionnelle qui se présente sous la forme d'une laveuse à pression, comprenant une pompe laquelle est positionnée à l'intérieur du carter, des moyens d'admission pour l'alimentation en liquide vers ladite pompe et des moyens de décharge pour assurer l'alimentation du liquide depuis la pompe et le raccordement avec les moyens d'application pour le liquide sous haute pression.

8. Appareil selon la revendication 7, **caractérisé en ce que** pour actionner la pompe, les moyens d'entraînement de l'appareil sont pilotés de façon sélective de sorte à permettre le transfert de l'entraînement entre l'unité roue mobile et la pompe.

9. Appareil selon la revendication 1, **caractérisé en ce que** le passage d'admission comporte une extrémité ouverte qui peut être utilisée à titre de dispositif d'aspiration lorsque le passage d'admission est raccordé à l'orifice d'admission de l'unité roue mobile afin de ramasser des matériaux au niveau d'une surface.

10. Appareil selon la revendication 9, **caractérisé en ce qu'**un matériau qui est ramassé passe le long du passage et est évacué hors de l'orifice de décharge en contournant l'unité roue mobile.

11. Appareil selon la revendication 1, **caractérisé en ce qu'**une alimentation en carburant est fournie à un passage de décharge, ladite alimentation en carburant étant activée de façon sélective et, une fois qu'elle est activée, le carburant est dirigé dans le flux d'air provenant de l'orifice de décharge.

12. Appareil selon la revendication 1, **caractérisé en ce qu'**un orifice d'alimentation en carburant est ménagé au niveau d'un orifice de décharge, ou de façon adjacente à ce dernier, ledit carburant étant fourni de façon sélective à travers un orifice d'admission pour se rendre dans un flux d'air provenant de l'orifice de décharge afin de permettre l'inflammation dudit carburant et l'émission de flammes à partir dudit orifice de décharge.

13. Appareil selon la revendication 12, **caractérisé en ce que** le passage, lorsqu'il est raccordé à l'orifice de décharge, permet de contrôler la direction dudit air et/ou desdites flammes sortant de l'orifice de décharge.

14. Appareil selon la revendication 13, **caractérisé en ce que** l'appareil peut être utilisé dans un premier mode pour sécher des matériaux de rejet grâce au soufflage d'air sur ceux-ci, suivi de l'utilisation du même appareil pour enflammer lesdits matériaux de rejet et suivie à son tour du flux d'air vers les matériaux en feu pour encourager la combustion continue des matériaux.

15. Appareil selon la revendication 14, **caractérisé en ce qu'**une fois que les matériaux de rejet sont enflammés, l'alimentation en carburant se rendant dans le flux d'air est arrêtée de sorte que par la suite seul de l'air est soufflé sur les matériaux de rejet en feu.

16. Appareil selon la revendication 12, **caractérisé en ce que** l'alimentation en carburant est pilotée par une soupape montée au niveau de l'orifice d'admission de carburant en provenance d'une alimentation en carburant laquelle est branchée sur l'orifice d'admission de carburant.

17. Appareil selon la revendication 12, **caractérisé en** cc que lors de son introduction dans le flux d'air, le carburant est converti en une pulvérisation.
